# EUROPEAN PATENT APPLICATION

(11) **EP 3 110 102 A1**
(43) Date of publication of application: **28.12.2016**
(21) Application number: 16175285.2
(22) Date of filing: 20.06.2016
(51) Int. Cl.: H04L 29/06, G06F 21/60, G06F 21/62, H04L 29/08

(54) **COMMUNICATING PRIVATE DATA AND DATA OBJECTS**

(30) Priority: 26.06.2015 US 201514752594
(71) Applicant: Cisco Technology, Inc., San Jose, CA 95134-1706 (US)
(72) Inventor: MILLAR, Keith, San Jose, CA California 95134 (US)
(74) Representative: Clark, Jane Anne

(57) **Abstract**

In some implementations, a method includes establishing a communication channel with a server via an internet protocol (IP) network interface. The method also includes communicating client private data with the server via the communication channel. The method further includes transmitting one or more interest messages to the server via an information centric networking (ICN) network interface based on the client private data. In other implementations, a method includes establishing a communication channel with a client device via an internet protocol (IP) network interface. The method also includes communicating client private data with the client device via the communication channel. The method further includes receiving one or more interest messages from the client device via an information centric networking (ICN) network interface.

## Description

### FIELD OF THE INVENTION

The present disclosure relates to Information Centric Networking (ICN) system architectures. More specifically, the present disclosures relates to communicating private data and/or data objects.

### BACKGROUND

In ICN system architectures, client devices (e.g., consumers or requestors) generally request data from servers (e.g., producers) using interest messages. The client devices transmit interest messages towards the server via one or more routers and the servers may transmit the requested data towards the client device using data objects (e.g., data messages). The interest messages may include names that may be used to identify data. The routers may use the names to transmit (e.g., forward or route) interest messages towards one or more servers that may have the data. The data objects also include the names of the data that is included in the data objects. The routers may also use the names to transmit (e.g., forward or route) data objects towards the client devices.

Aspects and examples of the present invention are set out in the appended claims.

### BRIEF DESCRIPTION OF THE DRAWINGS

So that the present disclosure can be understood by those of ordinary skill in the art, a more detailed description may be had by reference to aspects of some illustrative implementations, some of which are shown in the accompanying drawings. The appended drawings, however, illustrate only some example features of the present disclosure and are therefore not to be considered limiting, for the description may admit to other effective features.
Figure 1 is a block diagram illustrating a system architecture, in accordance with some embodiments.
Figure 2 is a sequence diagram illustrating an example process for communicating client private data and/or data objects, in accordance with some embodiments.
Figure 3 is a sequence diagram illustrating an example process for communicating client private data and/or data objects, in accordance with some embodiments.
Figure 4 is a flowchart representation of a method of communicating client private data and/or data objects, in accordance with some embodiments.
Figure 5 is a flowchart representation of a method of communicating client private data and/or data objects, in accordance with some embodiments.
Figure 6 is a block diagram of a computing device, in accordance with some embodiments.
Figure 7 is a block diagram of a computing device, in accordance with some embodiments.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

### DESCRIPTION OF EXAMPLE EMBODIMENTS

Numerous details are described herein in order to provide a thorough understanding of the illustrative implementations shown in the accompanying drawings. However, the accompanying drawings show only some example aspects of the present disclosure and are therefore not to be considered limiting. Those of ordinary skill in the art will appreciate from the present disclosure that other effective aspects and/or variants do not include all of the specific details described herein. Moreover, well-known systems, methods, components, devices and circuits have not been described in exhaustive detail so as not to unnecessarily obscure more pertinent aspects of the implementations described herein.

### Overview

Various implementations disclosed herein include apparatuses, systems, and methods for communicating client private data and/or data objects. For example, in some implementations, a method includes establishing a communication channel with a server via an internet protocol (IP) network interface. The method also includes communicating client private data with the server via the communication channel. The method further includes transmitting one or more interest messages to the server via an information centric networking (ICN) network interface based on the client private data.

In other implementations, a method includes establishing a communication channel with a client device via an internet protocol (IP) network interface. The method also includes communicating client private data with the client device via the communication channel. The method further includes receiving one or more interest messages from the client device via an information centric networking (ICN) network interface.

### Detailed Description

Information Centric Networking (ICN) system architectures are increasing in popularity. Examples of ICN system architectures include the Named Data Networking (NDN) system architecture and the Content-Centric Networking (CCN) system architecture. As discussed above, an ICN system architecture (such as an NDN system architecture) may allow a consumer (e.g., a client device) to request data using interest messages that identify the name of the requested data. A producer (e.g., a producer or provider of the requested data, such as a server computing device) may receive the interest messages and may transmit data objects (in response to the interest messages) to the consumer. The interest messages and/or data objects are routed and/or forwarded by routers through the ICN system architecture using the names in the interest messages and data objects. Transmitting an interest message to request a data object and receiving the data object may be referred to as an Interest-Data exchange.

An ICN system architecture, such as an NDN system architecture, may allow the routers that route/forward interest messages and/or data objects to store (e.g., cache) NDN data objects in their respective caches. When a router receives a request (e.g., an interest packet) for a data object and the router has the data object stored in its cache, the router may transmit the NDN data object from cache in response to the request instead of forwarding the request toward a server. This allows the router to transmit the NDN data object toward a client device more quickly. However, the cache may include client private data if the client private data is communicated using an NDN system architecture (or other ICN system architecture) because NDN routers store data objects in their caches. In one embodiment, the client private data may be data that may be transient. For example, client private data may include data that is used temporarily (e.g., an encryption key that is used for a period of time or for one communication session). In another embodiment, the client private data may be data that may not be communicated to more than one client device/user (e.g., may not be reusable or may not be requested multiple times). For example, client private data may include a username and/or password for a user. The same username and/or password may not be requested multiple times. In a further embodiment, the client private data may be data that is specific to a user and/or communication session. In another example, the client private data may include an encryption key for a specific user and/or communication session. When the router stores the client private data (e.g., data objects that include the client private data) in its cache, this may decrease the amount of space in the cache for storing other data objects. Because the client private data may be transient, user/session specific, and/or not reusable (e.g., not requested multiple times by different client devices), it may not be beneficial to cache the client private data because the client private data may use up space in the cache that may be used for data objects that may be requested multiple time by multiple client devices.

In some embodiments, a system architecture may use an NDN system architecture (or other ICN system architecture) and an IP system architecture. In the system architecture disclosed herein, a client device and a server (e.g., a server computer) may communicate client private data using an internet protocol (IP) communication channel (e.g., a transmission control protocol/internet protocol (TCP/IP) communication channel) established via an IP network interface. For example, the client device may provide a username and/or password to the server via (e.g., using) the IP communication channel. After the client private data is communicated using the IP communication channel, the client device and the server may exchange interest messages and/or data objects using an NDN network interface. Communicating the client private data via the IP network interface may help prevent the client private data from being stored in the caches of NDN routers. This may allow the NDN routers to store more data objects in their caches. In addition, this may allow existing network architectures (which are often IP network architectures) work in conjunction with NDN network architectures more easily.

Although the present disclosure may refer to the NDN system architecture, it should be understood that the NDN system architecture is merely an example architecture that may be used. Other embodiments may use other types of system architectures (e.g., CCN, Pursuit, NetInf, etc.) and the examples, implementations, and/or embodiments described herein may be used with the other types of system architectures.

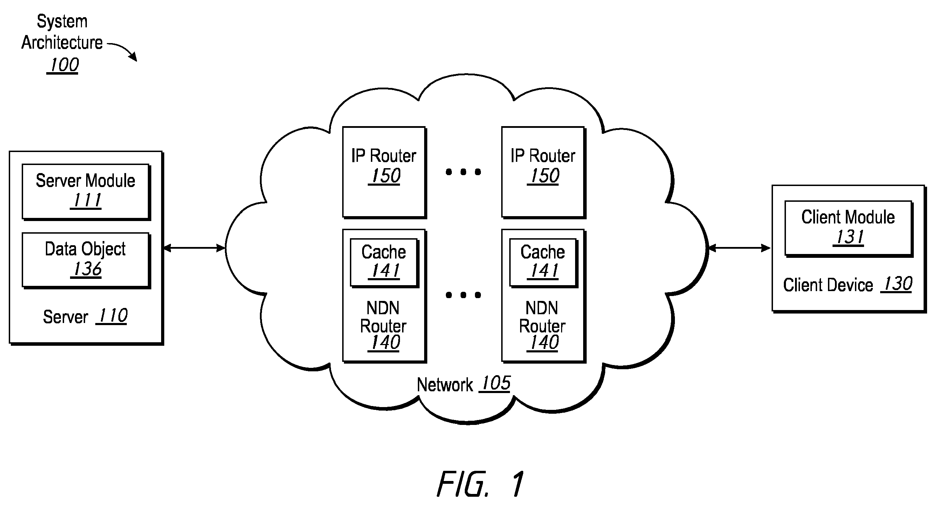

Figure 1 is a block diagram illustrating a system architecture 100, in accordance with some embodiments. The system architecture includes a server 110, a client device 130, a network 105, IP routers 150, and NDN routers 140. The system architecture 100 may be an NDN system architecture and/or an IP system architecture (e.g., a hybrid system architecture). For example, a consumer (e.g., client device 130) in the system architecture 100 may use interest messages to request data and a producer (e.g., server 110) may use may use data objects (e.g., NDN data objects) to transmit the requested data. The server 110 may be referred to as a producer (or provider) and the client device 130 may be referred to as a consumer (or a requestor).

The server 110 may be one or more computing devices (such as a rack-mount server, a router computer, a server computer, a personal computer, a mainframe computer, a smartphone, a personal digital assistant (PDA), a laptop computer, a tablet computer, a desktop computer, etc.). The client device 130 may also be a computing device (e.g., a personal computer, a smartphone, a personal digital assistant (PDA), a laptop computer, a tablet computer, a desktop computer, etc.). The network 105 may include one or more of a public network (e.g., the Internet), a private network (e.g., a local area network (LAN) or wide area network (WAN)), a wired network (e.g., Ethernet network), a wireless network (e.g., an 802.11 network or a Wi-Fi network), a cellular network (e.g., a Long Term Evolution (LTE) network), routers, hubs, switches, server computers, and/or a combination thereof.

As illustrated in Figure 1, the server 110 includes a data object 136. For example, the data object 136 may reside (e.g., may be stored) on a memory (e.g., a hard disk, a solid state disk, etc.) of the server 110. In other embodiments, the data object 136 may reside on a data store (e.g., a separate computing device with a memory, a hard disk, a solid state disk, etc.), that may be separate from the server 110. The data object 136 may be content or data that may be owned, managed, and/or administered by the server 110. For example, the data object 136 may be a file, an image, a movie, a portion of a movie, a portion of a file, etc. The server 110 may provide the data object 136 to client devices (e.g., client device 130) that request the data object 136 (e.g., that transmit an interest message with the name of the data object 136). The server 110 also includes a server module 111. In one embodiment, the data object 136 may be an NDN data object, a CCN data object, etc.

The system architecture 100 includes IP routers 150. An IP router 150 may be a communication device (e.g., a computing device such as a router, a switch, etc.) that may forward and/or route traffic, data, messages, packets, etc., between networks. The IP routers 150 may route IP traffic, IP data, IP messages, IP packets, etc., between the server 110 and the client device 130. For example, the IP routers 150 may receive client private data from the client device 130 and may forward the client private data towards the server 110, or vice versa.

The system architecture 100 also includes NDN routers 140. An NDN router 140 may be a communication device (e.g., a computing device such as a router, a switch, etc.) that may route and/or forward data between the server 110 and the client device 130. For example, an NDN router 140 may receive interest messages (e.g., requests for data/content) from the client device 130 and may forward the interest messages toward the server 110. The server 110 may transmit data objects to the client device 130 (in response to the interest messages) via the NDN routers 140. Each NDN router 140 may include a cache 141. Each NDN router 140 may also include multiple network interfaces (e.g., multiple network ports and/or network connections). An NDN router 140 may receive interest messages (e.g., NDN interest messages, CCN interest messages, etc.) and may forward/route interest messages between computing devices (e.g., between client device 130 and a server 110). For example, the NDN router 140 may receive an interest message at a first network interface (e.g., a first port) and may forward/route the interest message using a second network interface (e.g., a second port). The NDN router 140 may also receive data objects in response to the interest messages and may forward/route data objects (e.g., NDN data objects, CCN data objects) between computing devices e.g., between client device 130 and a server 110). For example, the NDN router 140 may receive a data object at the second network interface and may forward/route the data object using the first network interface.

Each NDN router 140 may include a forwarding information base (FIB). The FIB (not shown in the figures) may be populated by a name-based routing protocol. The FIB may indicate which network interface(s) of an NDN router 140 should be used to forward/route an interest message based on prefixes and/or portions of the name in the interest message. For example, an interest message may include the name "/company1/video/video1." The FIB may indicate that interest messages with a prefix of "/company1" should be forwarded/routed to the first network interface (e.g., transmitted through the first network interface). An NDN router 140 may also be statically configured to route different prefixes and/or portions of names to different network interfaces. An NDN router 140 may also include a pending interest table (PIT). The PIT (not shown in the figures) may store a list of the interest messages that are waiting for returning data objects (e.g., a list of interest messages that have not been satisfied). In one embodiment, an NDN router 140 may aggregate interest messages with matching names received from different network interfaces (e.g., different ports). When the NDN router 140 aggregates interest messages, the NDN router 140 may not create a separate entry in the PIT when an interest message with a name that matches an entry in the PIT is received. Instead, the NDN router 140 may update the matching entry to indicate which network interface the interest message was received from.

As discussed above, the system architecture 100 may allow a NDN router 140 to store (e.g., cache) NDN data objects in its cache 141. For example, when a NDN router 140 receives an initial request (e.g., an interest packet) for the data object 136 from the client device 130 (or another client device) and the router does not have the data object 136 in the cache 141, the NDN router 140 may forward the initial interest message toward the server 110. The server 110 may receive the initial interest message and may transmit the data object 136 to the NDN router 140. When the NDN router 140 receives the data object 136 (for the first time), the NDN router 140 may store the data object 136 in the cache 141 and may forward the data object 136 to the client device 130. When the NDN router 140 receives subsequent interest messages for the data object 136, the NDN router 140 may already have the data object 136 stored in its cache 141. In a general NDN system architecture, the NDN router 140 may transmit the data object 136 stored in the cache 141 toward the client device 130 in response to the request, instead of forwarding the request toward the server 110. This may improve latency and may reduce the amount of network congestion in the network 105. In one embodiment, the caches 141 may also allow multi-path and multi-destination routing without using domain name system (DNS) lookups, load balancers, and proxies.

As discussed, a NDN router (e.g., NDN router 140) in general NDN system architectures may store data objects (that are received) in a cache to improve latency and/or to reduce the amount of network congestion in the network 105. However, as discussed above, client private data may also be stored in the cache when the client private data is communicated via a NDN network interface (and via the NDN routers 140). For example, a username and/or password may be stored in the cache if the username and/or password are communicated via NDN network interfaces (and via the NDN routers 140). Storing the client private data in the caches 141 may reduce the amount of space in the caches 141 for other data objects. Because the client private data may be transient, user/session specific, and/or not reusable, it may not be beneficial to cache the client private data in the caches 141.

As illustrated in Figure 1, the server 110 includes a server module 111 and the client device 130 includes a client module 131. The server module 111 may be software, hardware, firmware, or a combination thereof, which may communicate client private data, interest messages, and/or data objects with the client device 130. The client module 131 may be software, hardware, firmware, or a combination thereof, which may communicate client private data, interest messages, and/or data objects with the server 110. In one embodiment, the server module 111 and/or the client module 131 may help prevent client private data from being stored in the caches 141 of NDN routers 140. This may allow the NDN routers 140 to store more data objects in their caches.

In one embodiment, the client module 131 may establish a communication channel with the server 110 via an IP network interface. For example, the client module 131 may establish a transmission control protocol/internet protocol (TCP/IP) connection with the server 110 via a TCP interface (e.g., a TCP/IP socket/port). The client module 131 may communicate client private data with the server 110 via the communication channel (and the IP network interface). For example, the client module 131 may transmit a username and/or password that the server 110 may use to authenticate the client device 130. In another example, the client module 131 may receive client private data from the server 110. The client device 130 may communicate client private data with the server 110 using various methods, functions, and/or operations. For example, the client device 130 may use hypertext transfer protocol (HTTP) GET and HTTP POST operations. Other examples of client private date include, but are not limited to, a cookie (e.g., a web cookie, a browser cookie, etc.), a search query (e.g., a web search), search results (e.g., results for the search query or web search), encryption keys, etc. Another example of client private data may include a manifest file (e.g., a file that identifies different portions of a digital video asset, such as a digital video), etc. The manifest file may include identifiers (e.g., names) for content that may be specific to a user. For example, the manifest file may include identifiers for digital video files or portions of digital video files that include advertisements, movie previews, etc. It shall be understood that the types of client private data disclosed herein are merely examples of client private data. In other embodiments, client private data may include any data that may not be suitable for caching (e.g., data that may not be re-requested, data that may be user/session specific data, data that may be transient data, etc.).

In one embodiment, the client private data may be communicated with the server 110 via the IP routers 150. For example, the IP routers 150 may route/forward the client data between the client device 130 and the server 110. In one embodiment, the client private data may not be transmitted towards the server 110 via the NDN routers 140. In one embodiment, the client device 130 may not know or may not be aware of the names of the data objects to request. The client module 131 may optionally receive data indicating one or more names for one or more data objects from the server 110, via the communication channel (and the IP network interface). For example, the client device 130 may not know or may not be aware of the names for the portions of a digital video asset. In another example, the client device 130 may not know or may not be aware of the names for the data objects that include search results of a search query (e.g., the results of a web search). In one embodiment, the client private data may include one or more names for one or more data objects.

In one embodiment, the server 110 may perform an HTTP redirect to a data object (e.g., an HTTP redirect to an NDN data object or a CCN data object). For example, the server 110 may redirect a browser (e.g., a web browser or other application used to view web pages) of client device 130 to the data object (rather than transmitting one or more names to the client device 130). The browser may request the data object (e.g., send an interest message for the data object) via an ICN network interface of the client device 130. In a further example, the server 110 may direct the client device to a web page that includes links to one or more data objects (e.g., one or more NDN data objects, one or more CCN data objects). When a user selects and/or activates one of the links, the client device 130 may determine the name of the data object from the selected/activated link and may transmit a request for the data object via the ICN network interface of the client device 130.

In one embodiment, the client private data may include data indicating that one or more data objects have been updated. For example, the client private data may include a list of one or more names for one or more data objects that have been updated in a recent period of time. The server 110 may transmit the list of one or more names to the client device 130. This may allow the client device 130 to be aware that data objects have been updated and the client device 130 may transmit interest messages to request the one or more update data objects. For example, the server 110 may transmit client private data indicating that the data objects that includes the scores for a sporting event has been updated/changed (e.g., the score for the sporting event has changed). The client device 140 may transmit interest messages for the update data objects to receive the new scores for the sporting event.

In one embodiment, the client module 131 may transmit one or more interest messages toward the server 110 via an ICN network interface (e.g., via an NDN network interface). For example, the client module 131 may transmit one or more interest messages to one of the NDN routers 140 and the one or more interest messages may be routed/forwarded towards the server 110 by the NDN routers 140. Each of the one or more interest messages may include a name (e.g., an identifier) for a data object (e.g., a NDN data object, a CCN data object, etc.). In one embodiment, the client module 131 may transmit the one or more interest messages based on the client private data. For example, the client module 131 may receive a list of one or more names for one or more data objects from the server. The client module 131 may transmit the one or more interest messages based on the list of one or more names (e.g., the one or more interest messages may include the one or more names). In another example, the client module 131 may transmit a username and/or password to the server 110 and may receive data indicating that the client device 130 has been authenticated by the server 110. The client module 131 may transmit the one or more interest messages after receiving the data indicating that the client device 130 has been authenticated. The client module 131 may receive one or more data objects based on the one or more interest messages. For example, the client module 131 may receive one or more data objects in response to the one or more interest messages. The client module 131 may communicate additional client private data with the server 110 via the IP network interface (and the IP routers 150), may transmit additional interest messages, and/or may receive additional data objects (as discussed one more detail below).

In one embodiment, the server module 111 may establish a communication channel with the client device 130 via an IP network interface. For example, the server module 111 may establish a TCP/IP connection with the client device 130 via a TCP interface (e.g., TCP/IP socket/port). The server module 111 may communicate client private data with the client device 130 via the communication channel (and the IP network interface). For example, the server module 111 may receive a username and/or password that the server 110 may use to authenticate the client device 130. In another example, the server module 111 may transmit an encryption key (that the client device 130 may use to decrypt data objects) to the client device 130. The server 110 may communicate client private data with the client device 130 using various methods, functions, and/or operations. For example, the server 110 may use hypertext transfer protocol (HTTP) GET and HTTP POST operations. As discussed above, examples of client private data include, but are not limited to, cookies, search queries, search results, encryption keys, manifest files etc. Also as discussed above, in one embodiment, the client private data may not be communicated with the client device 130 via the NDN routers 140. The client private data may be communicated with the client device 130 via the IP routers 150. In one embodiment, the server module 111 may optionally transmit data indicating one or more names for one or more data objects to the client device 130, via the communication channel (and the IP network interface).

In one embodiment, the server module 111 may receive one or more interest messages from the client device 130 via an ICN network interface. For example, the server module 111 may receive one or more interest messages from the client device 130 via the NDN routers 140. Each of the one or more interest messages may include a name (e.g., an identifier) for a data object (e.g., a NDN data object, a CCN data object, etc.). The server module 111 may transmit one or more data objects based on the one or more interest messages received from the client device 130. For example, the server module 111 may transmit one or more data objects in response to the one or more interest messages. The server module 111 may communicate additional client private data with the client device 130 via the IP network interface (and the IP routers 150), may receive additional interest messages, and/or may transmit additional data objects (as discussed one more detail below).

In one embodiment, the system architecture 100 may allow the NDN routers 140 to have additional space (e.g., storage space) in their caches 141 for data objects. Client private data may not be stored in the caches 141 of the NDN routers 140 because the client private data is communicated between the server 110 and the client device 130 via IP network interfaces (and IP routers 150). Thus, the NDN routers 140 may have space in their caches 141 for additional data objects because the space that would have been used to store the client private data (had the client private data been communicated via the NDN routers 140) may be used to store the additional data objects instead. Communicating the client private data using IP network interfaces and the IP routers 150 may help prevent data objects from being pushed out of the caches 141 of the NDN routers 140. In addition, this may allow existing network architectures (which are often IP network architectures) work in conjunction with NDN network architectures more easily.

Although Figure 1 may refer to the NDN system architecture, it should be understood that the NDN system architecture is merely an example architecture that may be used. Other embodiments, may use other types of system architectures (e.g., CCN, Pursuit, NetInf, etc.). For example, the embodiments, implementations, and/or examples described herein may be applicable to any ICN system architecture that uses Interest-Data exchanges to transmit data between clients (e.g., consumers) and server (e.g., producers) and/or any IP system architecture. In another example, the embodiments, implementations, and/or examples described herein may be applicable to any ICN system architecture that allows routers to cache data objects and allows routers to respond to interest messages using data objects stored in cache.

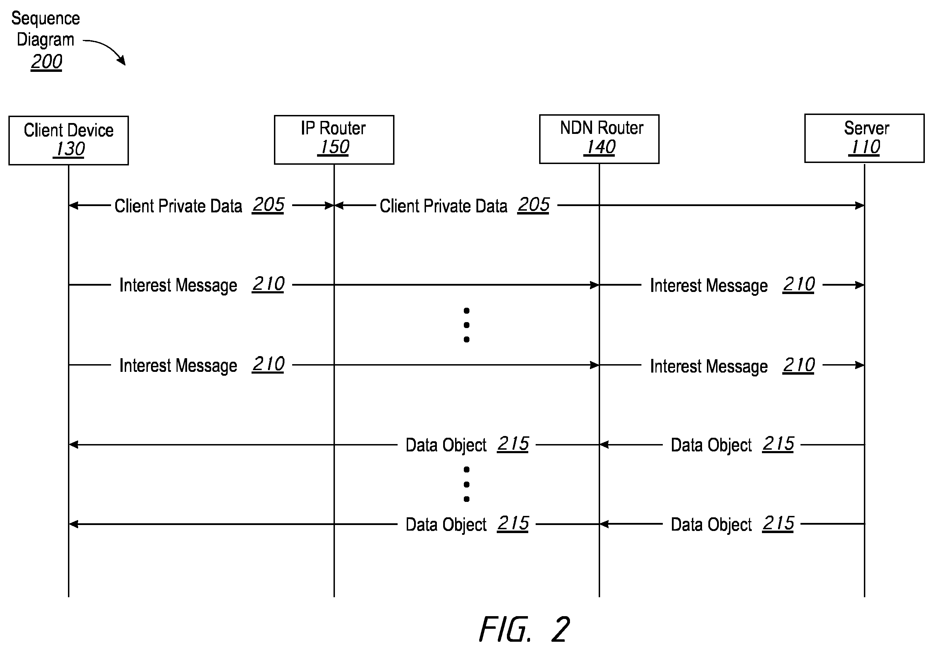

Figure 2 is a sequence diagram 200 illustrating an example process for communicating client private data and/or data objects, in accordance with some embodiments. As discussed above, the client device 130 and the server 110 may communicate client private data 205 (e.g., encryption keys, username, password, cookies, etc.) via IP network interfaces. For example, the client device 130 may transmit and/or receive the client private data 205 via an IP network interface of the client device 130. In another example, the server 110 may transmit and/or receive the client private data 205 via an IP network interface of the server 110. As illustrated in Figure 2, the client private data may be communicated (e.g., transmitted and/or received) between the client device 130 and the server 110 via IP router 150. Although one IP router 150 is illustrated in Figure 2, it shall be understood that any number of IP routers 150 may forward and/or route the client private data between the client device 130 and the server 110 (as discussed above and illustrated in Figure 1).

The client device 130 may transmit one or more interest messages 210 towards the server 110 via an ICN network interface of the client device 130 after communicating the client private data 205 with the server 110. As discussed above, the one or more interest messages 210 may include one or more names for one or more data objects that the client device 130 is requesting from the server 110. For example, the one or more interest messages 210 may include names for portions (e.g., chunks) of a digital video asset of the server 110. In one embodiment, the NDN router 140 may determine that the data objects requested by the one or more interest messages 210 are not stored in a cache of the NDN router 140. The NDN router 140 may forward/route the one or more interest messages 210 (received from the client device 130) toward the server 110 when the data objects requested by the one or more interest messages 210 are not stored in a cache of the NDN router 140. The server 110 may receive the one or more interest messages 210 via an ICN network interface (e.g., an NDN network interface). The server 110 may transmit one or more data objects 215 towards the client device 130 based on (e.g., in response to) the one or more interest messages 210. For example, the server 110 may transmit one or more data objects 215 identified by the one or more names in the one or more interest messages 210. The NDN router may forward/route the one or more data objects 215 (received from the server 110) toward the client device 130. In another embodiment, the NDN router 140 may determine that the data objects requested by the one or more interest messages 210 are stored in the cache of the NDN router 140. The NDN router 140 may transmit the one or more data objects 215 from the cache in response to the one or more interest messages 210 (instead of forwarding/routing the one or more interest messages 210 toward the server 110) when the one or more data objects 215 requested by the one or more interest messages 210 are stored in the cache of the NDN router 140.

Although one NDN router 140 is illustrated in Figure 2, it shall be understood that any number of NDN routers 140 may forward and/or route the client private data between the client device 130 and the server 110 (as discussed above and illustrated in Figure 1). In addition, although Figure 2 illustrates that the one or more interest messages 210 are transmitted towards the server 110 and that the one or more data objects 215 are transmitted by the server 110, it shall be understood that in other embodiments, the one or more interest messages 210 may be transmitted to a different server (not shown in the figures) and the different server may transmit the one or more data objects 215 towards the client device 130.

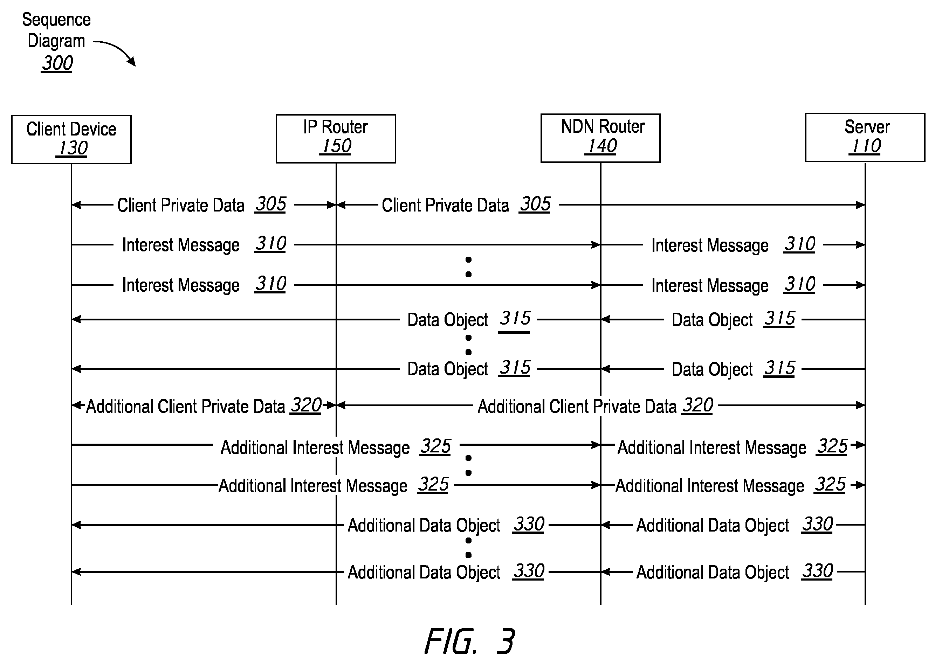

Figure 3 is a sequence diagram 300 illustrating an example process for communicating client private data and/or data objects, in accordance with some embodiments. As discussed above, the client device 130 and the server 110 may communicate client private data 305 via IP network interfaces. As illustrated in Figure 2, the client private data may be communicated between the client device 130 and the server 110 via IP router 150. Although one IP router 150 is illustrated in Figure 2, it shall be understood that any number of IP routers 150 may forward and/or route the client private data between the client device 130 and the server 110 (as discussed above and illustrated in Figure 1).

The client device 130 may transmit one or more interest messages 310 towards the server 110 via an ICN network interface of the client device after communicating the client private data 305 with the server 110. As discussed above, the one or more interest messages 310 may include one or more names for one or more data objects that the client device 130 is requesting from the server 110. In one embodiment, the NDN router 140 may determine that the data objects requested by the one or more interest messages 310 are not stored in a cache of the NDN router 140. The NDN router 140 may forward/route the one or more interest messages 310 (received from the client device 130) toward the server 110 when the data objects requested by the one or more interest messages 310 are not stored in a cache of the NDN router 140. The server 110 may receive the one or more interest messages 310 via an ICN network interface (e.g., an NDN network interface). The server 110 may transmit one or more data objects 315 towards the client device 130 based on the one or more interest messages 310. The NDN router may forward/route the one or more data objects 315 (received from the server 110) toward the client device 130. In another embodiment, the NDN router 140 may determine that the data objects requested by the one or more interest messages 310 are stored in the cache of the NDN router 140. The NDN router 140 may transmit the one or more data objects 315 from the cache in response to the one or more interest messages 310 (instead of forwarding/routing the one or more interest messages 310 toward the server 110) when the one or more data objects 315 requested by the one or more interest messages 310 are stored in the cache of the NDN router 140.

As illustrated in Figure 3, the client device 130 and the server 110 may communicate additional client private data 320 via their respective IP network interfaces and the IP router 150. For example, the client device 130 may transmit an additional search query (e.g., an additional web search) to the server 110 and the server 110 may transmit additional search results to the client device 130. In another example, the client device 130 may retransmit a username and/or password to re-authenticate the client device 130 with the server 110 (e.g., a previous authentication may have timed out). In a further example, the server 110 may transmit different encryption keys to the client device 130.

Although one NDN router 140 is illustrated in Figure 3, it shall be understood that any number of NDN routers 140 may forward and/or route the client private data between the client device 130 and the server 110 (as discussed above and illustrated in Figure 1). In addition, although Figure 3 illustrates that the interest messages 310 and 325 are transmitted towards the server 110, and that the data objects 315 and 330 are transmitted by the server 110, it shall be understood that in other embodiments, the interest messages 310 and 325 may be transmitted to a different server (not shown in the figures) and the different server may transmit the data objects 315 and 330 towards the client device 130.

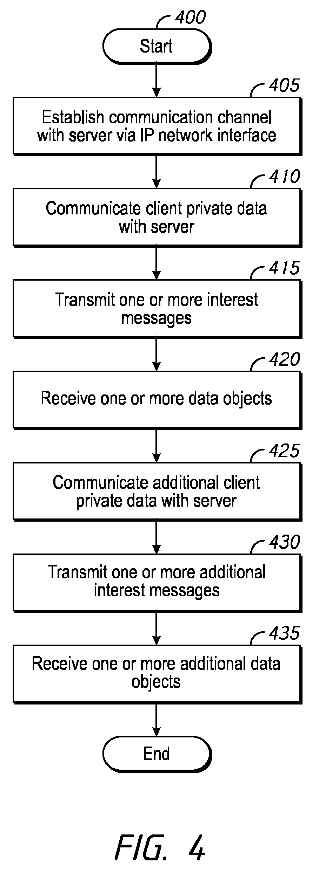

Figure 4 is a flowchart representation of a method 400 of communicating client private data and/or data objects, in accordance with some embodiments. In some implementations, the method 400 may be performed by a client device and/or a client module (e.g., client device 130 and/or client module 131 illustrated in Figure 1). The client device and/or a client module may include hardware (e.g., circuitry, dedicated logic, programmable logic, microcode, etc.), software (e.g., instructions run on a processor to perform hardware simulation), firmware, or a combination thereof. Briefly, method 400 includes communicating client private data, transmitting one or more interest messages, and receiving one or more data objects. The method 400 begins at block 405 where the method 400 includes establishing a communication channel with a server via an IP network interface. For example, a communication channel may be established with the server via a TCP/IP socket/port. At block 410, the method 400 includes communicating client private data with the server via the IP network interface. For example, the client private data (e.g., username, password, encryption key, etc.) may be communicated with the server via the IP network interface and one or more IP routers (as illustrated above and discuss in conjunction with Figures 1, 2, and 3).

The method 400 includes transmitting one or more interest messages to the server via an ICN network interface (e.g., a NDN network interface, a CCN network interface, etc.) at block 415. As discussed above, the one or more interest messages may include one or more names for one or more data objects of the server. In one embodiment, as discussed above, the one or more interest messages may be transmitted (via the ICN network interface) to a different server. At block 420, the method 400 includes receiving one or more data objects (e.g., NDN data objects, ICN data objects, etc.) from the server (via the ICN network interface) based on the one or more interest messages (e.g., in response to the one or more interest messages). In one embodiment, as discussed above, the one or more data objects may be received (via the ICN network interface) from a different server. The method 400 includes communicating additional client private data with the server via the IP network interface at block 425. For example, as discussed above, a username and/or password may be re-transmitted to the server. In another example, an additional search query may be submitted to the server and additional search results may be received from the server. At block 430, the method 400 includes transmitting one or more additional interest messages to the server via the ICN network interface. In one embodiment, as discussed above, the one or more additional interest messages may be transmitted (via the ICN network interface) to a different server. The method 400 includes receiving one or more additional data objects from the server via the ICN network interface at block 435. In one embodiment, as discussed above, the one or more additional data objects may be received (via the ICN network interface) from a different server.

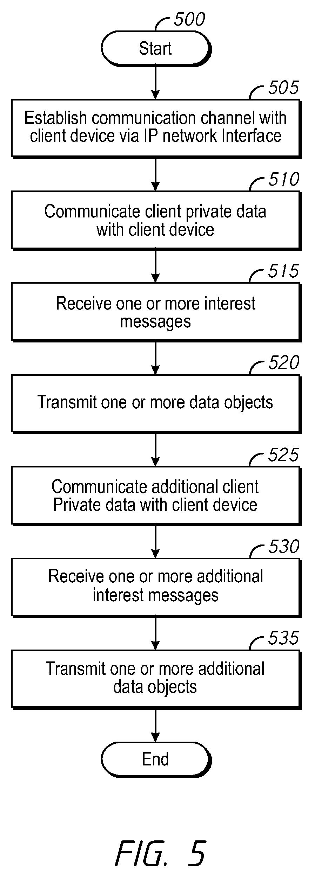

Figure 5 is a flowchart representation of a method 500 of communicating client private data and/or data objects, in accordance with some embodiments. In some implementations, the method 500 may be performed by a server and/or a server module (e.g., server 110 and/or server module 111 illustrated in Figure 1). The server and/or a server module may include hardware (e.g., circuitry, dedicated logic, programmable logic, microcode, etc.), software (e.g., instructions run on a processor to perform hardware simulation), firmware, or a combination thereof. Briefly, method 500 includes communicating client private data, receiving one or more interest messages, and transmitting one or more data objects. The method 500 begins at block 505 where the method 500 includes establishing a communication channel with a client device via an IP network interface. For example, a communication channel may be established with the client device via a TCP/IP socket/port. At block 510, the method 500 includes communicating client private data with the client device via the IP network interface. For example, the client private data (e.g., username, password, encryption key, etc.) may be communicated with the client device via the IP network interface and one or more IP routers (as illustrated above and discuss in conjunction with Figures 1, 2, and 3).

The method 500 includes receiving one or more interest messages from the client device via an ICN network interface (e.g., a NDN network interface, a CCN network interface, etc.) at block 515. As discussed above, the one or more interest messages may include one or more names for one or more data objects of the server. At block 520, the method 500 includes transmitting one or more data objects (e.g., NDN data objects, ICN data objects, etc.) to the client device (via the ICN network interface) based on the one or more interest messages (e.g., in response to the one or more interest messages). The method 500 includes communicating additional client private data with the client device via the IP network interface at block 525. For example, as discussed above, a username and/or password may be re-transmitted by the client device. In another example, an additional search query may be received and additional search results may be transmitted to the client device. At block 530, the method 500 includes receiving one or more additional interest messages from the client device via the ICN network interface. The method 500 includes transmitting one or more additional data objects to the client device via the ICN network interface at block 535.

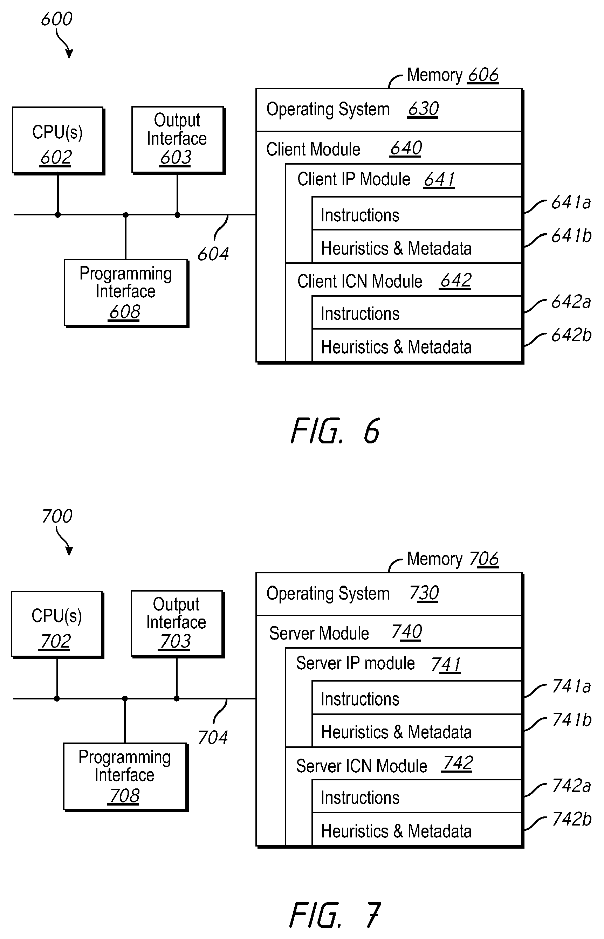

Figure 6 is a block diagram of a computing device 600, in accordance with some embodiments. While certain specific features are illustrated, those skilled in the art will appreciate from the present disclosure that various other features have not been illustrated for the sake of brevity, and so as not to obscure more pertinent aspects of the embodiments disclosed herein. To that end, as a non-limiting example, in some embodiments the computing device 600 includes one or more processing units (CPU's) 602 (e.g., processors), one or more output interfaces 603, a memory 606, a programming interface 608, and one or more communication buses 604 for interconnecting these and various other components.

In some embodiments, the communication buses 604 include circuitry that interconnects and controls communications between system components. The memory 606 includes high-speed random access memory, such as DRAM, SRAM, DDR RAM or other random access solid state memory devices; and may include non-volatile memory, such as one or more magnetic disk storage devices, optical disk storage devices, flash memory devices, or other non-volatile solid state storage devices. The memory 606 optionally includes one or more storage devices remotely located from the CPU(s) 602. The memory 606 comprises a non-transitory computer readable storage medium. Moreover, in some embodiments, the memory 606 or the non-transitory computer readable storage medium of the memory 606 stores the following programs, modules and data structures, or a subset thereof including an optional operating system 630 and a client module 640. In some embodiment, one or more instructions are included in a combination of logic and non-transitory memory. The operating system 630 includes procedures for handling various basic system services and for performing hardware dependent tasks. In some embodiments, the client module 640 may be configured to receive communicate client private data, transmit interest messages, and/or receive data objects. To that end, the client module 640 includes a client IP module 641 and a client ICN module 642.

In some embodiments, the client IP module 641 may communicate client private data with a server via an IP interface. To that end, the client IP module 641 includes a set of instructions 641a and heuristics and metadata 641b. In some embodiments, the client ICN module 642 may transmit interest messages to a server and/or receive data objects (e.g., NDN data objects, CCN data objects) from the server via an ICN network interface. To that end, the client ICN module 642 includes a set of instructions 642a and heuristics and metadata 642b.

Although the client module 640, the client IP module 641, and the client ICN module 642 are illustrated as residing on a single computing device 600, it should be understood that in other embodiments, any combination of the client module 640, the client IP module 641, and the client ICN module 642 may reside on separate computing devices.

Figure 7 is a block diagram of a computing device 700, in accordance with some embodiments. While certain specific features are illustrated, those skilled in the art will appreciate from the present disclosure that various other features have not been illustrated for the sake of brevity, and so as not to obscure more pertinent aspects of the embodiments disclosed herein. To that end, as a non-limiting example, in some embodiments the computing device 700 includes one or more processing units (CPU's) 702 (e.g., processors), one or more output interfaces 703, a memory 706, a programming interface 708, and one or more communication buses 704 for interconnecting these and various other components.

In some embodiments, the communication buses 704 include circuitry that interconnects and controls communications between system components. The memory 706 includes high-speed random access memory, such as DRAM, SRAM, DDR RAM or other random access solid state memory devices; and may include non-volatile memory, such as one or more magnetic disk storage devices, optical disk storage devices, flash memory devices, or other non-volatile solid state storage devices. The memory 706 optionally includes one or more storage devices remotely located from the CPU(s) 702. The memory 706 comprises a non-transitory computer readable storage medium. Moreover, in some embodiments, the memory 706 or the non-transitory computer readable storage medium of the memory 706 stores the following programs, modules and data structures, or a subset thereof including an optional operating system 730 and a server module 740. In some embodiment, one or more instructions are included in a combination of logic and non-transitory memory. The operating system 730 includes procedures for handling various basic system services and for performing hardware dependent tasks. In some embodiments, the server module 740 may be configured to communicate client private data, receive interest messages, and/or transmit data objects (e.g., NDN data objects, CCN data objects, etc.). To that end, the server module 740 includes a server IP module 741 and a server ICN module 742.

In some embodiments, the server IP module 741 may communicate client private data with a client device via an IP network interface. To that end, the server IP module 741 includes a set of instructions 741a and heuristics and metadata 741b. In some embodiments, the server ICN module 742 may receive interest messages from the client device and/or transmit data objects to the client device via an ICN network interface. To that end, the server ICN module 742 includes a set of instructions 742a and heuristics and metadata 742b.

Although the server module 740, the server IP module 741, and the server ICN module 742 are illustrated as residing on a single computing device 700, it should be understood that in other embodiments, any combination of the server module 740, the server IP module 741, and the server ICN module 742 may reside on separate computing devices.

Moreover, Figures 6 through 7 are intended more as functional description of the various features which may be present in a particular embodiment as opposed to a structural schematic of the embodiments described herein. As recognized by those of ordinary skill in the art, items shown separately could be combined and some items could be separated. For example, some functional modules shown separately in Figures 6 through 7 could be implemented in a single module and the various functions of single functional blocks could be implemented by one or more functional blocks in various embodiments. The actual number of modules and the division of particular functions and how features are allocated among them will vary from one embodiment to another, and may depend in part on the particular combination of hardware, software and/or firmware chosen for a particular embodiment.

The present disclosure describes various features, no single one of which is solely responsible for the benefits described herein. It will be understood that various features described herein may be combined, modified, or omitted, as would be apparent to one of ordinary skill. Other combinations and sub-combinations than those specifically described herein will be apparent to one of ordinary skill, and are intended to form a part of this disclosure. Various methods are described herein in connection with various flowchart steps and/or phases. It will be understood that in many cases, certain steps and/or phases may be combined together such that multiple steps and/or phases shown in the flowcharts can be performed as a single step and/or phase. Also, certain steps and/or phases can be broken into additional sub-components to be performed separately. In some instances, the order of the steps and/or phases can be rearranged and certain steps and/or phases may be omitted entirely. Also, the methods described herein are to be understood to be open-ended, such that additional steps and/or phases to those shown and described herein can also be performed.

Some aspects of the systems and methods described herein can advantageously be implemented using, for example, computer software, hardware, firmware, or any combination of computer software, hardware, and firmware. Computer software can comprise computer executable code stored in a computer readable medium (e.g., non-transitory computer readable medium) that, when executed, performs the functions described herein. In some embodiments, computer-executable code is executed by one or more general purpose computer processors. A skilled artisan will appreciate, in light of this disclosure, that any feature or function that can be implemented using software to be executed on a general purpose computer can also be implemented using a different combination of hardware, software, or firmware. For example, such a module can be implemented completely in hardware using a combination of integrated circuits. Alternatively or additionally, such a feature or function can be implemented completely or partially using specialized computers designed to perform the particular functions described herein rather than by general purpose computers.

Multiple distributed computing devices can be substituted for any one computing device described herein. In such distributed embodiments, the functions of the one computing device are distributed (e.g., over a network) such that some functions are performed on each of the distributed computing devices.

Some embodiments may be described with reference to equations, algorithms, and/or flowchart illustrations. These methods may be implemented using computer program instructions executable on one or more computers. These methods may also be implemented as computer program products either separately, or as a component of an apparatus or system. In this regard, each equation, algorithm, block, or step of a flowchart, and combinations thereof, may be implemented by hardware, firmware, and/or software including one or more computer program instructions embodied in computer-readable program code logic. As will be appreciated, any such computer program instructions may be loaded onto one or more computers, including without limitation a general purpose computer or special purpose computer, or other programmable processing apparatus to produce a machine, such that the computer program instructions which execute on the computer(s) or other programmable processing device(s) implement the functions specified in the equations, algorithms, and/or flowcharts. It will also be understood that each equation, algorithm, and/or block in flowchart illustrations, and combinations thereof, may be implemented by special purpose hardware-based computer systems which perform the specified functions or steps, or combinations of special purpose hardware and computer-readable program code logic means.

Furthermore, computer program instructions, such as embodied in computer-readable program code logic, may also be stored in a computer readable memory (e.g., a non-transitory computer readable medium) that can direct one or more computers or other programmable processing devices to function in a particular manner, such that the instructions stored in the computer-readable memory implement the function(s) specified in the block(s) of the flowchart(s). The computer program instructions may also be loaded onto one or more computers or other programmable computing devices to cause a series of operational steps to be performed on the one or more computers or other programmable computing devices to produce a computer-implemented process such that the instructions which execute on the computer or other programmable processing apparatus provide steps for implementing the functions specified in the equation(s), algorithm(s), and/or block(s) of the flowchart(s).

Some or all of the methods and tasks described herein may be performed and fully automated by a computer system. The computer system may, in some cases, include multiple distinct computers or computing devices (e.g., physical servers, workstations, storage arrays, etc.) that communicate and interoperate over a network to perform the described functions. Each such computing device typically includes a processor (or multiple processors) that executes program instructions or modules stored in a memory or other non-transitory computer-readable storage medium or device. The various functions disclosed herein may be embodied in such program instructions, although some or all of the disclosed functions may alternatively be implemented in application-specific circuitry (e.g., ASICs or FPGAs) of the computer system. Where the computer system includes multiple computing devices, these devices may, but need not, be co-located. The results of the disclosed methods and tasks may be persistently stored by transforming physical storage devices, such as solid state memory chips and/or magnetic disks, into a different state.

In some implementations, a method includes establishing a communication channel with a server via an internet protocol (IP) network interface. The method also includes communicating client private data with the server via the communication channel. The method further includes transmitting one or more interest messages to the server via an information centric networking (ICN) network interface based on the client private data. In other implementations, a method includes establishing a communication channel with a client device via an internet protocol (IP) network interface. The method also includes communicating client private data with the client device via the communication channel. The method further includes receiving one or more interest messages from the client device via an information centric networking (ICN) network interface.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." The word "coupled", as generally used herein, refers to two or more elements that may be either directly connected, or connected by way of one or more intermediate elements. Additionally, the words "herein," "above," "below," and words of similar import, when used in this application, shall refer to this application as a whole and not to any particular portions of this application. Where the context permits, words in the above Detailed Description using the singular or plural number may also include the plural or singular number respectively. The word "or" in reference to a list of two or more items, that word covers all of the following interpretations of the word: any of the items in the list, all of the items in the list, and any combination of the items in the list. The word "exemplary" is used exclusively herein to mean "serving as an example, instance, or illustration." Any implementation described herein as "exemplary" is not necessarily to be construed as preferred or advantageous over other implementations.

It will also be understood that, although the terms "first," "second," etc. may be used herein to describe various elements, these elements should not be limited by these terms. These terms are only used to distinguish one element from another. For example, a first contact could be termed a second contact, and, similarly, a second contact could be termed a first contact, which changing the meaning of the description, so long as all occurrences of the "first contact" are renamed consistently and all occurrences of the second contact are renamed consistently. The first contact and the second contact are both contacts, but they are not the same contact. Also as used in the description of the embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items.

Further as used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

The disclosure is not intended to be limited to the implementations shown herein. Various modifications to the implementations described in this disclosure may be readily apparent to those skilled in the art, and the generic principles defined herein may be applied to other implementations without departing from the spirit or scope of this disclosure. The teachings of the invention provided herein can be applied to other methods and systems, and are not limited to the methods and systems described above, and elements and acts of the various embodiments described above can be combined to provide further embodiments. Accordingly, the novel methods and systems described herein may be embodied in a variety of other forms; furthermore, various omissions, substitutions and changes in the form of the methods and systems described herein may be made without departing from the spirit of the disclosure. The accompanying claims and their equivalents are intended to cover such forms or modifications as would fall within the scope and spirit of the disclosure.

## Claims

1. A method comprising:
establishing a communication channel with a server via an internet protocol (IP) network interface;
communicating client private data with the server via the communication channel; and
transmitting one or more interest messages to the server via an information centric networking (ICN) network interface based on the client private data.

2. The method of claim 1, further comprising:
receiving one or more data objects based on the one or more interest messages, optionally wherein the one or more interest messages comprise one or more names for the one or more data objects.

3. The method of claim 2, wherein communicating client private data comprises:
transmitting a search query to the server via the communication channel; and
receiving one or more search results via the communication channel, wherein the one or more search results comprises one or more names for the one or more data objects.

4. The method of claim 2 or 3, wherein communicating client private data comprises:
receiving a manifest file comprising one or more names for one or more portions of a digital video asset, wherein the digital video asset comprises the one or more data objects.

5. The method of claim 2, 3 or 4, wherein communicating client private data comprises:
receiving an encryption key from the server via the communication channel.

6. The method of claim 5, wherein receiving the one or more data objects comprises:
decrypting the one or more data objects based on the encryption key.

7. The method of any of claims 2 to 6, further comprising:
communicating additional client private data with the server via the communication channel;
transmitting additional interest messages to the server via the ICN network interface based on the additional client private data; and
receiving additional data objects based on the additional interest messages.

8. The method of any preceding claim, wherein communicating client private data comprises:
transmitting one or more of a user name or a password to the server via the communication channel; and/or
receiving a cookie from the server via the communication channel.

9. A method comprising:
establishing a communication channel with a client device via an internet protocol (IP) network interface;
communicating client private data with the client device via the communication channel; and
receiving one or more interest messages from the client device via an information centric networking (ICN) network interface.

10. The method of claim 9, further comprising:
transmitting one or more data objects based on the one or more interest messages, optionally wherein the one or more interest messages comprise one or more names for the one or more data objects.

11. The method of claim 10, wherein communicating client private data comprises:
receiving a search query from the client device via the communication channel; and
transmitting one or more search results via the communication channel based on the search query, wherein the one or more search results comprises one or more names for the one or more data objects.

12. The method of claim 10 or 11, wherein communicating client private data comprises:
transmitting a manifest file comprising one or more names for one or more portions of a digital video asset, wherein the digital video asset comprises the one or more data objects; and/or
transmitting an encryption key from to the client device via the communication channel.

13. The method of any of claims 10 to 12, further comprising:
communicating additional client private data with client device via the communication channel;
receiving additional interest messages from the client device via the ICN network interface; and
transmitting additional data objects based on the additional interest messages.

14. The method of any of claims 9 to 13, wherein communicating client private data comprises:
receiving one or more of a user name or a password from the client device via the communication channel; and/or
transmitting a cookie from to the client device via the communication channel.

15. An apparatus, comprising:
an internet protocol (IP) network interface;
an information centric networking (ICN) network interface;
one or more processors; and
a memory comprising instructions that when executed cause the one or more processors to perform operations comprising the method of any of the preceding claims.
